# DEMANDE DE BREVET EUROPEEN

(11) **EP 4 414 571 A1**
(43) Date de publication de la demande: **14.08.2024**
(21) Numéro de dépôt: 24155922.8
(22) Date de dépôt: 06.02.2024
(51) Int. Cl.: F16C 11/04

(54) **DISPOSITIF DE RÉGLAGE D'UNE COLONNE DE DIRECTION DE VÉHICULE AUTOMOBILE ET PROCÉDÉ D ASSEMBLAGE D'UN DISPOSITIF DE RÉGLAGE D'UNE COLONNE DE DIRECTION**

(30) Priorité: 07.02.2023 FR 2301135
(71) Demandeur: JTEKT COLUMN SYSTEMS FRANCE SAS, 25350 Mandeure (FR)
(72) Inventeur: LIDOINE, Eric, 25700 MATHAY (FR); CHOLLEY, Fabien, 25260 MONTENOIS (FR); BEVALOT, Fabien, 25150 GOUX-LES-DAMBELIN (FR)
(74) Mandataire: Lavoix

(57) **Abrégé**

Un dispositif de réglage (10) d'une colonne de direction de véhicule automobile comprenant
- une platine (12) destinée à être fixée sur le véhicule automobile ;
- un corps tubulaire (14) comprenant une première extrémité (34) et une deuxième extrémité (36) ; et
- une liaison pivot (16) du corps (14) à la platine (12) comprenant au moins un pivot (40) s'étendant en saillie externe de la deuxième extrémité (36) du corps (14), et au moins un orifice de fixation (42) formé dans la platine (12) dans lequel est logé le pivot (40).

L'orifice de fixation (42) est délimité par un bord périphérique (43) présentant une interruption (44); le pivot (40) du corps (14) présentant une section oblongue avec un grand axe (50) et un petit axe (52).

## Description

La présente invention concerne un dispositif de réglage d'une colonne de direction de véhicule automobile.

Un tel dispositif de réglage est notamment utilisé pour permettre d'ajuster puis de bloquer la position de la colonne de direction par rapport à la structure du véhicule, en fonction de la morphologie du chauffeur.

Généralement, un tel dispositif de réglage comprend un corps tubulaire définissant un passage de réception de la colonne de direction et une platine destinée à être fixée sur le véhicule automobile.

Il est connu de fixer le corps tubulaire sur la platine par exemple par rivetage.

Cependant, une telle fixation du corps tubulaire sur la platine n'est pas entièrement satisfaisante.

En effet, une telle fixation par rivetage nécessite de nombreuses étapes manuelles complexes de positionnement des pièces et l'utilisation d'une machine supplémentaire de rivetage, ce qui est peu économe en temps et est également couteux.

Un des buts de l'invention est de pallier ces inconvénients et, en particulier, de proposer un dispositif de réglage d'une colonne de direction de véhicule automobile facile et rapide à assembler de manière économique.

Ainsi, l'invention a pour objet un dispositif de réglage d'une colonne de direction de véhicule automobile, le dispositif de réglage comprenant :
- une platine destinée à être fixée sur le véhicule automobile ;
- un corps tubulaire s'étendant selon un axe de corps, le corps comprenant une première extrémité et une deuxième extrémité opposées l'une de l'autre selon l'axe de corps, le corps définit un passage de réception d'un axe de la colonne de direction ;
- une liaison pivot du corps à la platine autour d'un axe de rotation perpendiculaire à l'axe de corps, comprenant au moins un pivot s'étendant en saillie externe de la deuxième extrémité du corps selon l'axe de rotation, et au moins un orifice de fixation formé dans la platine dans lequel est logé le pivot.

L'orifice de fixation est délimité par un bord périphérique présentant une interruption ayant une largeur d'interruption déterminée ; le pivot du corps présentant perpendiculairement à l'axe de rotation une section oblongue avec un grand axe et un petit axe, ladite section oblongue ayant selon le grand axe une longueur de pivot supérieur à la largeur d'interruption et selon le petit axe une largeur de pivot inférieure à la largeur d'interruption.

Selon des modes de réalisation particuliers de l'invention, le dispositif de réglage présente l'une ou plusieurs des caractéristiques optionnelles suivantes, prise(s) individuellement ou selon toute combinaison techniquement réalisable :
- le corps est mobile en rotation par rapport à la platine selon l'axe de rotation entre une position d'assemblage, dans laquelle le grand axe pointe vers l'interruption, et une position assemblée, dans laquelle le petit axe pointe vers l'interruption ;
- le dispositif de réglage comprend, en outre, un système de mise sous tension configuré pour exercer une pression axiale selon l'axe d'assemblage entre la platine et le corps ;
- la platine comprend un pontet d'insertion solidarisant les deux bords de l'interruption l'un à l'autre, configuré pour autoriser l'insertion du pivot dans l'orifice de fixation par l'interruption ;
- le pivot du corps est serti sur la platine ;
- la platine comprend au moins un crochet apte à enserrer une partie du corps ;
- le grand axe forme avec le petit axe un angle compris entre 35° et 145° ;
- la liaison pivot du corps à la platine comprend deux pivots s'étendant en saillie externe de la deuxième extrémité du corps selon l'axe de rotation dans des directions opposées et deux orifices de fixation formés dans la platine.

L'invention concerne également un procédé d'assemblage d'un dispositif de réglage d'une colonne de direction, le dispositif de réglage étant tel que décrit précédemment, le procédé comprenant les étapes suivantes :
a) fourniture de la platine et du corps,
b) agencement du corps de sorte que le grand axe pointe vers l'interruption,
c) insertion du pivot du corps dans l'orifice de fixation de la platine à travers l'interruption, et
d) agencement du corps de sorte que le petit axe pointe vers l'interruption.

Dans un mode de réalisation particulier, le procédé d'assemblage comprend une étape supplémentaire après l'étape d) de sertissage du pivot du corps et de la platine.

L'invention et ses avantages seront mieux compris à la lecture de la description qui suit, donnée uniquement à titre d'exemple non limitatif et faite en référence aux dessins annexés, parmi lesquels :
- [Fig 1] la Figure 1 est une vue schématique en perspective d'un dispositif de réglage d'une colonne de direction de véhicule automobile selon l'invention, le corps étant en position assemblée ;
- [Fig 2] [Fig 3] [Fig 4] les Figures 2 à 4 sont des vues schématiques en perspective des étapes d'assemblage du dispositif de réglage illustré sur la Figure 1 ;
- [Fig 5] la Figure 5 est un agrandissement au niveau de la liaison pivot du corps à la platine du dispositif de réglage illustré sur la Figure 1 ;
- [Fig 6] la Figure 6 est une représentation schématique d'un orifice de fixation formée sur la platine du dispositif de réglage illustré sur la Figure 1 ; et
- [Fig 7] la Figure 7 est une représentation schématique d'un pivot formée sur le corps du dispositif de réglage illustré sur la Figure 1.

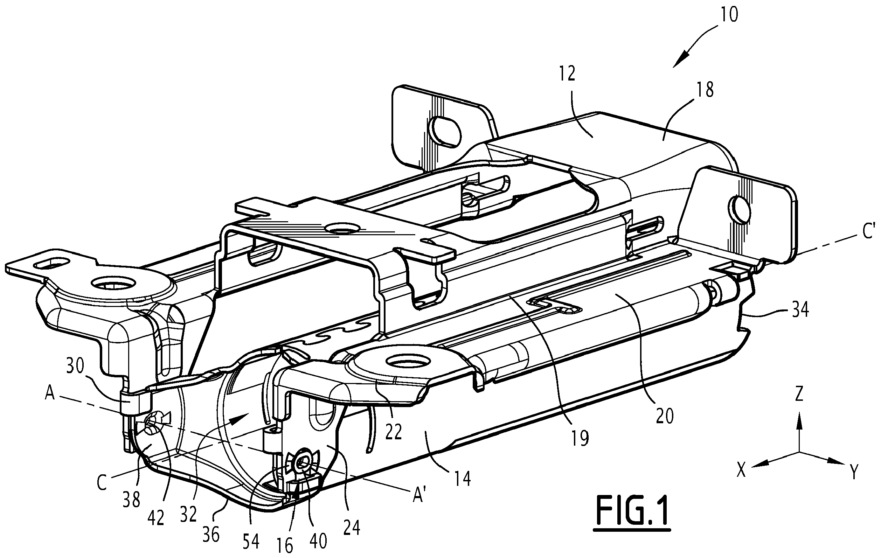

Les Figures 1 à 5 illustrent un dispositif de réglage 10 d'une colonne de direction de véhicule automobile.

La colonne de direction (non-représentée sur les Figures) s'étend suivant une direction longitudinale X. Elle est raccordée, à une extrémité, à un volant (non-représenté sur les Figures) du véhicule automobile.

On définit un repère orthogonal avec une direction transversale Y perpendiculaire à la direction longitudinale X et une direction d'élévation Z perpendiculaire à la direction longitudinale X et à la direction transversale Y.

De préférence, la colonne de direction est réglable suivant la direction longitudinale et/ou en hauteur.

A cet effet, la colonne de direction comprend avantageusement une coulisse (non représentée sur les Figures).

En référence à la Figure 1, le dispositif de réglage 10 comprend une platine 12, un corps tubulaire 14 et une liaison pivot 16 du corps 14 à la platine 12 autour d'un axe de rotation A-A', s'étendant par exemple sensiblement selon la direction transversale Y.

La platine 12 est destinée à être fixée sur le véhicule automobile, par exemple par vissage.

Par exemple, la platine 12 comprend une partie principale 18 avec une section transversale en U ouverte vers le bas et définissant deux bords latéraux 19 s'étendant selon la direction longitudinale X et opposés l'un de l'autre selon la direction transversale Y.

Les deux bords latéraux 19 sont par exemple espacés d'une distance D mesurée selon la direction transversale Y, comprise entre 5cm et 10 cm.

La platine 12 comprend, en outre, deux ailes 20 s'étendant, chacune, en saillie de l'un des bords latéraux 19.

Chacun des ailes 20 s'étend par exemple sensiblement perpendiculairement à la direction d'élévation Z.

Chacune des ailes 20 comprend de préférence une extrémité arrière 22, par exemple prolongeant l'aile 20 correspondante selon la direction longitudinale X au-delà du bord latéral 19 correspondant de la partie principale 18. Autrement dit, l'extrémité arrière 22 de chacune des ailes 20 ne s'étend pas au regard de la partie principale 18.

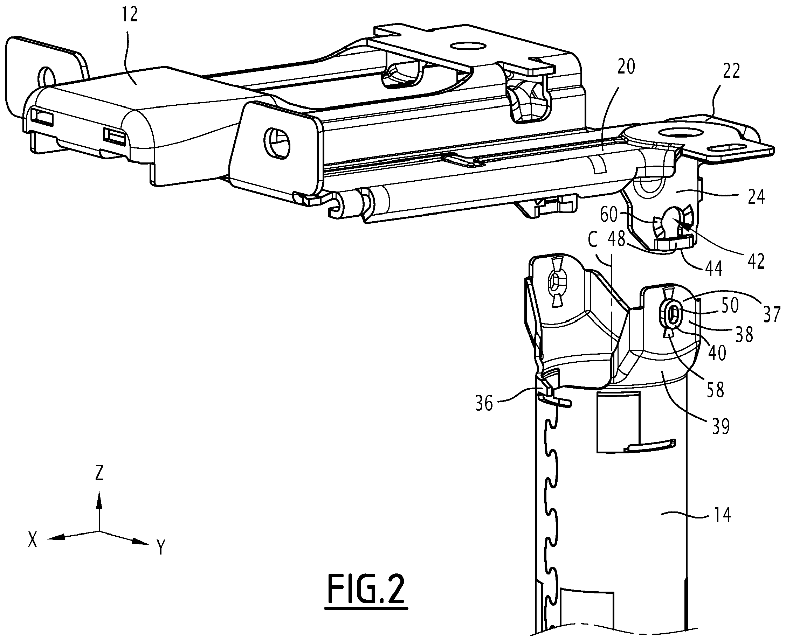

Comme cela est visible sur la Figure 2, la platine 12 comprend avantageusement une patte 24 faisant saillie d'une des ailes 20 selon la direction d'élévation Z.

En particulier, dans l'exemple illustré sur les figures, la patte 24 fait saillie de l'extrémité arrière 22, et par exemple vers le bas suivant la direction d'élévation Z.

De préférence, la platine 12 comprend deux pattes 24.

Chacune des pattes 24 s'étend avantageusement sensiblement perpendiculairement à la direction longitudinale Y.

Chacune des pattes 24 comprend une face intérieure 26 et une face extérieure 28 opposées l'une de l'autre selon la direction transversale Y, les faces intérieures 26 des deux pattes 24 étant en regard l'une de l'autre.

En particulier, dans l'exemple illustré sur les figures, la distance entre les faces intérieures 26 des deux pattes 24 est sensiblement égale à la distance D entre les deux bords latéraux 19 de la partie principale 18.

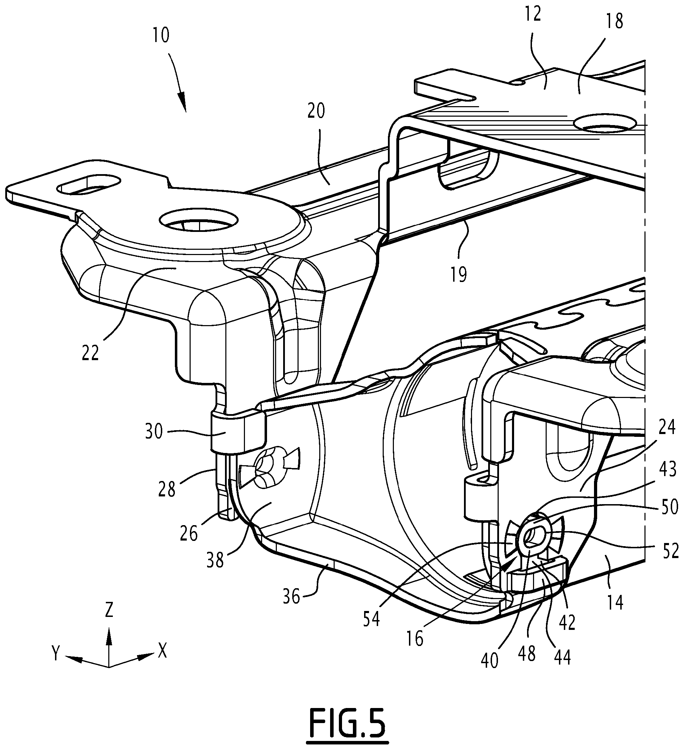

Avantageusement, comme cela est visible sur la Figure 5, la platine 12 comprend au moins un crochet 30 apte à enserrer une partie du corps 14.

Plus particulièrement, chacune des pattes 24 comprend un crochet 30, en particulier en regard de la face intérieure 26.

Le corps 14 s'étend selon un axe de corps C-C' perpendiculaire à l'axe de rotation A-A'.

De préférence, le corps 14 est un tube creux de section sensiblement circulaire, par exemple de rayon compris entre 2 cm et 5 cm.

Le corps 14 définit un passage de réception 32 d'un axe de la colonne de direction, et par exemple de la coulisse supérieure.

Le corps 14 comprend une première extrémité 34 et une deuxième extrémité 36 opposées l'une de l'autre selon l'axe de corps C-C'.

Avantageusement, le corps 14 comprend une patte 38, et de préférence deux pattes 38, s'étendant en saillie de la deuxième extrémité 36 du corps 14.

Chacune des pattes 38 comprend par exemple un plat 37 et une partie de transition 39 liant la deuxième extrémité 36 du corps 14 au plat 37.

Les plats 37 des deux pattes 38 sont de préférence parallèles entre eux et en regard l'un de l'autre selon la direction transversale Y.

La deuxième extrémité 36 du corps 14 est de préférence destinée à être assemblée à la platine 12 par la liaison pivot 16, comme cela sera décrit ci-dessous.

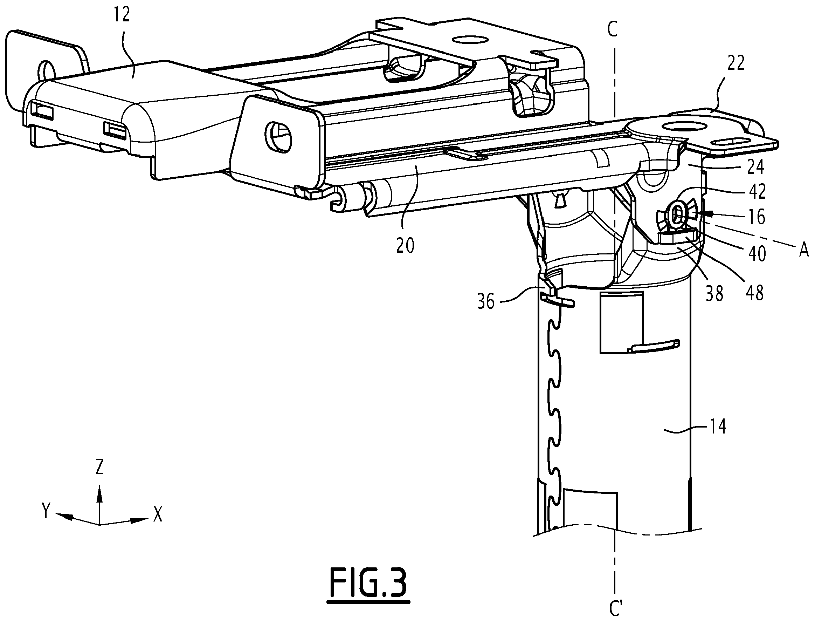

Avantageusement, le corps 14 est mobile en rotation par rapport à la platine 12 selon l'axe de rotation A-A' entre une position d'assemblage illustrée sur la Figure 3 et une position assemblée illustrée sur les Figures 1, 4 et 5.

Dans la position d'assemblage du corps 14 illustrée sur la Figure 3, l'axe du corps C-C' s'étend par exemple sensiblement selon la direction d'élévation Z.

Dans la position d'assemblage, chacun des plats 37 des pattes 38 du corps 14 sont au contact avec un jeu d'assemblage des faces intérieures 26 des pattes 24 de la platine 12.

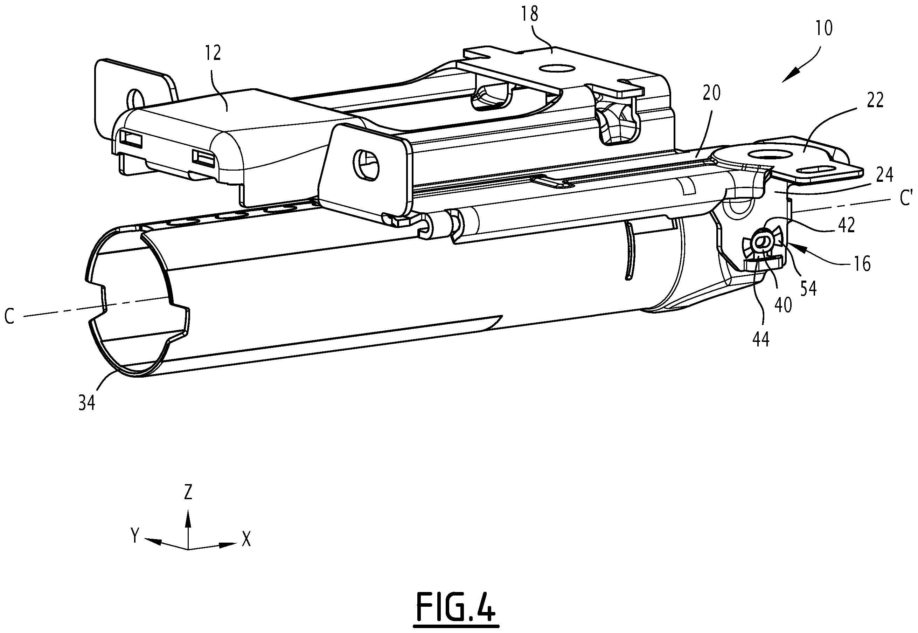

Dans la position assemblée du corps 14 illustrée sur les Figures 4 et 5, chacune des pattes 38 du corps 14 est par exemple enserrée dans le crochet 30 de la patte 24 correspondante de la platine 12, de sorte à bloquer la translation selon la direction transversale Y de la patte 38 du corps 14, et donc du corps 14.

Dans la position assemblée du corps 14 illustrée sur la Figure 4, l'axe du corps C-C' s'étend par exemple sensiblement selon la direction longitudinale X.

Avantageusement, dans sa position assemblée, le corps 14 est bloqué en position.

En particulier, les mobilités selon les directions X, Y, Z sont de préférence bloquées par la liaison pivot 16, comme cela sera détaillé par la suite.

La liaison pivot 16 comprend au moins un pivot 40 s'étendant en saillie externe de la deuxième extrémité 36 du corps 14 selon l'axe de rotation A-A', et au moins un orifice de fixation 42 formé dans la platine 12 dans lequel est logé le pivot 40.

Avantageusement, la liaison pivot 16 comprend deux pivots 40 s'étendant en saillie externe de la deuxième extrémité 36 du corps 14 selon l'axe de rotation A-A' dans des directions opposées, et deux orifices de fixation 42 correspondants formés dans la platine 12.

Chaque orifice de fixation 42 est par exemple ménagé sur l'une des pattes 24 de la platine 12.

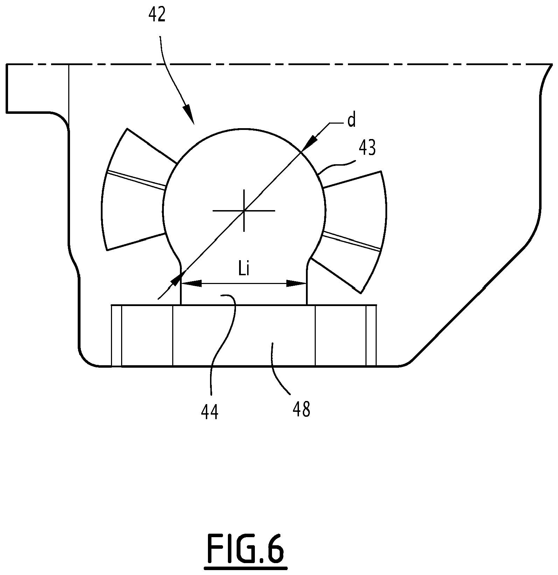

Comme illustré sur la Figure 6, chaque orifice de fixation 42 est délimité par un bord périphérique 43 présentant une interruption 44 ayant une largeur d'interruption Li déterminée.

L'interruption 44 s'étend par exemple selon la direction longitudinale X et est de préférence tournée vers le bas suivant la direction d'élévation Z.

La largeur d'interruption Li est par exemple comprise entre 5 mm et 15mm.

De préférence, le bord périphérique 43 de chacun des orifices de fixation 42 présente une forme sensiblement en U définissant ainsi l'interruption 44.

Chacun des orifices de fixation 42 présente un diamètre d déterminé, qui est par exemple légèrement supérieur à la largeur d'interruption Li.

De préférence, la liaison pivot 16 comprend, de préférence, pour chacun des deux orifices de fixation 42, un pontet d'insertion 48 configuré pour autoriser l'insertion du pivot 40 dans l'orifice de fixation 42 par l'interruption 44.

Avantageusement, le pontet d'insertion 48 relie deux côtés du bord périphérique 43, de préférence au niveau de l'interruption 44, de sorte à rigidifier l'orifice de fixation 42.

De préférence, le pontet d'insertion 48 solidarise les deux bords de l'interruption 44 l'un à l'autre.

Chaque pivot 40 fait par exemple saillie externe d'une patte 38 du corps 14, et de préférence vers l'extérieur.

Plus particulièrement, chaque pivot 40 est formé sur le plat 37 de la patte 38.

Par exemple, chaque pivot 40 est un canon étiré à partir de chacune des pattes 38 du corps 14.

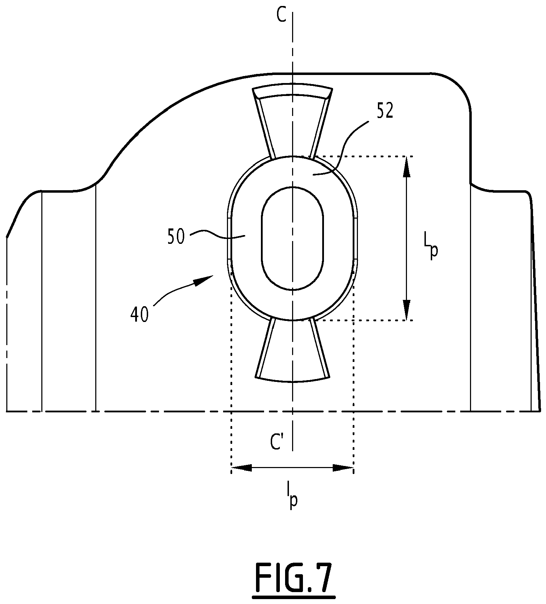

Comme cela est visible sur la Figure 7, le pivot 40 présente perpendiculairement à l'axe de rotation A-A' une section oblongue avec un grand axe 50 et un petit axe 52.

Ladite section oblongue a selon le grand axe 50 une longueur Lp de pivot supérieur à la largeur d'interruption Li et selon le petit axe 52 une largeur Ip de pivot inférieure à la largeur d'interruption Li.

La longueur Lp du pivot selon le grand axe 50 est par exemple comprise entre 8mm et 18 mm et la largeur Ip du pivot selon le petit axe 52 est par exemple comprise entre 4mm et 12 mm.

Avantageusement, la longueur Lp du pivot selon le grand axe 50 est égale au diamètre d de l'orifice de fixation 42 avec un serrage de fonctionnement.

De préférence, le grand axe 50 s'étend selon l'axe de corps C-C'.

Le grand axe 50 forme avec le petit axe 52 un angle compris entre 35° et 145, et par exemple sensiblement égale à 90°.

Dans la position d'assemblage illustrée sur la Figure 3, le grand axe 50 pointe de préférence vers l'interruption 48.

Autrement dit, le grand axe 50 s'étend perpendiculairement à la largueur d'interruption Li.

Dans la position d'assemblage, le pivot 40 peut être avantageusement inséré dans l'orifice de fixation 42, puisque la largeur du pivot Ip est plus petite que la largeur d'interruption Li.

Dans la position assemblée illustrée sur la Figure 4, le petit axe 52 pointe de préférence vers l'interruption 48.

Autrement dit, le petit axe 52 s'étend perpendiculairement à la largueur d'interruption Li.

Dans la position assemblée, chacun des pivots 40 est ainsi bloqué en position dans l'orifice de fixation 42, puisque la longueur du pivot Lp est plus grande que la largeur d'interruption Li.

De préférence, chacun des pivots 40 du corps 14 est serti sur la platine 12, et en particulier, dans la position assemblée du corps 14 de sorte à empêcher la translation selon l'axe A-A' du corps 14 dans sa position assemblée à la platine 12.

Plus particulièrement, chacun des pivots 40 du corps 14 est par exemple déformé de sorte à empêcher la translation selon l'axe A-A' du pivot 40 dans l'orifice de fixation 42.

De manière avantageuse, la liaison pivot 16 comprend, en outre, au moins un système de mise sous tension 54 configuré pour exercer une pression axiale selon l'axe de rotation A-A' entre la platine 12 et le corps 14, en particulier dans la position assemblée du corps 14.

De préférence, la liaison pivot 16 comprend un système de mise sous tension 54 par pivot 40.

Plus particulièrement, chaque système de mise sous tension 54 comprend au moins un premier bossage 58 ménagé sur le corps 14, et par exemple en saillie externe de la patte 38 correspondante, et au moins un deuxième bossage 60 complémentaire ménagé sur la platine 12, et de préférence sur la patte 24 correspondante.

Avantageusement, comme cela est visible sur les Figures, chaque système de mise sous tension 54 comprend deux premiers bossages 58 et deux seconds bossages 60 complémentaires.

De préférence, chaque premier bossage 58 est agencé autour du pivot 40 correspondant et chaque deuxième bossage 60 est agencé autour de l'orifice de fixation 42 correspondant.

Chacun de bossages 58, 60 présente par exemple une forme de secteur de disque d'anneau.

De préférence, chaque premier bossage 58 s'étend sur le deuxième bossage 60 complémentaire dans la position assemblée, de sorte à exercer une pression axiale selon l'axe de rotation A-A', et ainsi bloquer le corps 14 en position axiale.

Dans la position d'assemblage, chaque premier bossage 58 s'étend à distance de chaque deuxième bossage 60.

Un procédé d'assemblage d'un dispositif de réglage d'une colonne de direction va maintenant être décrit en référence aux figures 2 à 4.

Dans une première étape a), un corps 14 et une platine 12 d'un dispositif de réglage 10 tel que décrit ci-dessus sont fournis.

Dans une deuxième étape b), tel qu'illustré sur la Figure 2, le corps 14 est agencé de sorte que le grand axe 50 de chaque pivot 40 pointe vers l'interruption 44 de l'orifice de fixation 42 correspondant.

En particulier, le corps 14 est agencé de sorte que l'axe du corps C-C' s'étend sensiblement selon la direction d'élévation Z.

Dans une troisième étape c), chacun des pivots 40 du corps 14 est ensuite inséré dans l'orifice de fixation 42 correspondant de la platine 12, et de préférence à travers l'interruption 44 par le pontet d'insertion 48 correspondant.

Dans cette troisième étape c), le corps 14 est ainsi dans sa position d'assemblage.

Dans une quatrième étape d) illustrée sur la Figure 4, le corps 14 est agencé de sorte que le petit axe 52 de chaque pivot 40 pointe vers l'interruption 44 de l'orifice de fixation 42 correspondant.

En particulier, le corps 14 est tourné selon l'axe de rotation A-A', et de préférence d'un angle de 90°.

Dans cette quatrième étape d), le corps 14 est ainsi passé dans sa position assemblée, et est de préférence bloqué en position suivant les directions longitudinale X, transversale Y et verticale Z.

En particulier, l'orientation de la section oblongue de chacun des pivots bloque ainsi le pivot en positon dans l'orifice de fixation, et ainsi la mobilité du corps 14 selon les directions longitudinales X et d'élévation Z.

Avantageusement, dans cette position, chaque système de mise sous tension 54 exerce une pression axiale selon l'axe de rotation A-A' entre la platine 12 et le corps 14, et bloque donc également la mobilité du corps 14 par rapport à la platine 12, notamment en translation selon l'axe de rotation A-A'.

En outre, le risque de détachement du ou des pivots 40 du corps 14 de la platine 12 est de préférence limité par l'enserrement des pattes 38 du corps 14 dans les crochets 30 de la platine 12.

Alternativement ou de manière supplémentaire aux crochets 30, le procédé d'assemblage comprend en outre après la quatrième étape d), une cinquième étape de sertissage du ou des pivot(s) 40 du corps 14 et de la platine 12, en particulier afin de fixer le corps 14 dans sa position assemblée sur la platine 12.

Le dispositif de réglage 10 selon l'invention est facile et rapide à assembler, notamment grâce à la liaison pivot 16.

En effet, un tel assemblage nécessite peu d'étapes manuelles de positionnement complexes et ni de machine ou de pièces supplémentaires en comparaison avec une fixation par exemple réalisée par rivetage.

Un tel assemblage présente donc également un avantage économique.

## Revendications

1. Dispositif de réglage (10) d'une colonne de direction de véhicule automobile, le dispositif de réglage (10) comprenant :
- une platine (12) destinée à être fixée sur le véhicule automobile ;
- un corps tubulaire (14) s'étendant selon un axe de corps (C-C'), le corps (14) comprenant une première extrémité (34) et une deuxième extrémité (36) opposées l'une de l'autre selon l'axe de corps (C-C'), le corps (14) définit un passage de réception (32) d'un axe de la colonne de direction ; et
- une liaison pivot (16) du corps (14) à la platine (12) autour d'un axe de rotation (A-A') perpendiculaire à l'axe de corps (C-C'), comprenant au moins un pivot (40) s'étendant en saillie externe de la deuxième extrémité (36) du corps (14) selon l'axe de rotation (A-A'), et au moins un orifice de fixation (42) formé dans la platine (12) dans lequel est logé le pivot (40) ;
**caractérisé en ce que** l'orifice de fixation (42) est délimité par un bord périphérique (43) présentant une interruption (44) ayant une largeur d'interruption (Li) déterminée ;
le pivot (40) du corps (14) présentant perpendiculairement à l'axe de rotation (A-A') une section oblongue avec un grand axe (50) et un petit axe (52), ladite section oblongue ayant selon le grand axe (50) une longueur (Lp) de pivot supérieur à la largeur d'interruption (Li) et selon le petit axe (52) une largeur de pivot (lp) inférieure à la largeur d'interruption (Li),
le dispositif de réglage (10) comprenant, en outre, un système de mise sous tension (54) configuré pour exercer une pression axiale selon l'axe d'assemblage (A-A') entre la platine (12) et le corps (14).

2. Dispositif de réglage (10) selon la revendication 1, dans lequel le corps (14) est mobile en rotation par rapport à la platine (12) selon l'axe de rotation (A-A') entre une position d'assemblage, dans laquelle le grand axe (50) pointe vers l'interruption (44), et une position assemblée, dans laquelle le petit axe (52) pointe vers l'interruption (44).

3. Dispositif de réglage (10) selon l'une quelconque des revendications précédentes, dans lequel la platine (12) comprend un pontet d'insertion (48) solidarisant les deux bords de l'interruption (44) l'un à l'autre, configuré pour autoriser l'insertion du pivot (40) dans l'orifice de fixation (42) par l'interruption (44).

4. Dispositif de réglage (10) selon l'une quelconque des revendications précédentes, dans lequel le pivot (40) du corps (14) est serti sur la platine (12).

5. Dispositif de réglage (10) selon l'une quelconque des revendications précédentes, dans lequel la platine (12) comprend au moins un crochet (30) apte à enserrer une partie du corps (14).

6. Dispositif de réglage (10) selon l'une quelconque des revendications précédentes, dans lequel le grand axe (50) forme avec le petit axe (52) un angle compris entre 35° et 145°.

7. Dispositif de réglage (10) selon l'une quelconque des revendications précédentes, dans lequel la liaison pivot (16) du corps (14) à la platine (12) comprend deux pivots (40) s'étendant en saillie externe de la deuxième extrémité (36) du corps (14) selon l'axe de rotation (A-A') dans des directions opposées et deux orifices de fixation (42) formés dans la platine (12).

8. Procédé d'assemblage d'un dispositif de réglage (10) d'une colonne de direction, le dispositif de réglage (10) étant selon l'une quelconque des revendications précédentes, le procédé comprenant les étapes suivantes :
a) fourniture de la platine (12) et du corps (14),
b) agencement du corps (14) de sorte que le grand axe (50) pointe vers l'interruption (44),
c) insertion du pivot (40) du corps (14) dans l'orifice de fixation (42) de la platine (12) à travers l'interruption (44), et
d) agencement du corps (14) de sorte que le petit axe (52) pointe vers l'interruption (44).

9. Procédé d'assemblage selon la revendication 8, comprenant une étape supplémentaire après l'étape d) de sertissage du pivot (40) du corps (12) et de la platine (14).
